# EUROPEAN PATENT APPLICATION

(11) **EP 2 088 524 A1**
(43) Date of publication of application: **12.08.2009**
(21) Application number: 08164562.4
(22) Date of filing: 18.09.2008
(51) Int. Cl.: G06F 17/50

(54) **Analysis supporting apparatus, analysis supporting method, and analysis supporting program**

(30) Priority: 24.01.2008 JP 2008014048
(71) Applicant: Fujitsu Limited, Kawasaki-shi, Kanagawa 211-8588 (JP)
(72) Inventor: Ueda, Akira, Kawasaki-shi, Kanagawa 211-8588 (JP); Matsushita, Hideharu, Kawasaki-shi, Kanagawa 211-8588 (JP); Ishimine, Junichi, Kawasaki-shi, Kanagawa 211-8588 (JP)
(74) Representative: Stebbing, Timothy Charles

(57) **Abstract**

An analysis supporting apparatus (10) that supports a product analyzing operation, includes a model-data generating unit (11d) that generates model data regarding an analysis model of an analysis target component in association with component hierarchy data representing a hierarchy of components forming an analysis target product, and a advice-data generating unit (11g) that generates, based on a logic registered in advance, advice data from the model data to improve design with respect to the analysis target product.

## Description

The present invention relates to an analysis supporting apparatus, analysis supporting method, and analysis supporting program supporting a product analyzing operation and, in particular, an analysis supporting apparatus, analysis supporting method, and analysis supporting program allowing a designer to be provided with information for improving design without requiring any special skills.

In recent years, simulation technologies have become more advanced, thereby allowing various analyzing processes to be performed at a design stage before manufacturing an actual prototype to solve problems. For example, in an information processing apparatus, heat dissipation is an important problem in accordance with improved computation performance, and this heat dissipation problem can also be solved by performing an analysis at the time of designing.

While these various analyses at the designing stage are effective in solving problems early, improving quality, and reducing the development period, they increase the load on the designer. To get around this, in a technology disclosed in Japanese Patent Application Laid-open No. 11-66132, information including models for use in analysis is stored as case information and is searched with an arbitrary search condition being specified so as to reduce the number of processes required for the designer to perform an analyzing operation.

However, the technology disclosed in Japanese Patent Application Laid-open No. 11-66132 has a problem in which necessary information cannot be obtained unless the designer specifies an appropriate search condition. That is, to utilize case information stored, skill in searching is required, and not everyone can sufficiently utilize such information.

According to an aspect of the present invention, an analysis supporting apparatus that supports a product analyzing operation, includes a model-data generating unit that generates model data regarding an analysis model of an analysis target component in association with component hierarchy data representing a hierarchy of components forming an analysis target product; and a advice-data generating unit that generates, based on a logic registered in advance, advice data from the model data to improve design with respect to the analysis target product.

According to another aspect of the present invention, an analysis supporting method that supports a product analyzing operation, includes generating model data regarding an analysis model of an analysis target component in association with component hierarchy data representing a hierarchy of components forming an analysis target product; and generating, based on a logic registered in advance, advice data from the model data to improve design with respect to the analysis target product.

According to still another aspect of the present invention, a computer program implements the above method on a computer. The program may be stored on a computer-readable recording medium.

The above and other features, advantages and technical and industrial significance of this invention will be better understood by reading the following detailed description of presently preferred embodiments of the invention, when considered in connection with the accompanying drawings, in which:
Fig. 1 is a drawing of an example of a network including an analysis supporting apparatus according to an embodiment of the present invention;
Fig. 2A is a drawing of an outline of model data management by the analysis supporting apparatus according to the embodiment;
Fig. 2B is a drawing of an outline of model data management by the analysis supporting apparatus according to the embodiment;
Fig. 2C is a drawing of an outline of model data management by the analysis supporting apparatus according to the embodiment;
Fig. 3 is a functional block diagram of the configuration of the analysis supporting apparatus according to the embodiment;
Fig. 4 is a drawing of an example of a product master;
Fig. 5 is a drawing of an example of a component type master;
Fig. 6 is a drawing of an example of component hierarchical data;
Fig. 7 is a drawing of an example of operation-mode data;
Fig. 8 is a drawing of an example of model data;
Fig. 9 is a flowchart of an outline of procedure of performing an analysis when the analysis supporting apparatus is used;
Fig. 10 is a flowchart of a procedure of an analysis data generating process;
Fig. 11 is a flowchart of a procedure of an analyzing process;
Fig. 12 is a drawing of an example of an advice display screen;
Fig. 13 is a flowchart of a procedure of a simplified-model generating process;
Fig. 14A is a drawing of an example of a normal analysis model;
Fig. 14B is a drawing of an example of an analysis model of a simplified model;
Fig. 15 is a flowchart of a procedure of a library registering process;
Fig. 16 is a flowchart of a procedure of a calorific-value summing process;
Fig. 17 is a drawing of an example of calorific-value summation results;
Fig. 18 is a flowchart of a procedure of a verifying process; and
Fig. 19 is a functional block diagram of a computer that executes an analysis supporting program.

With reference to the attached drawings, an exemplary embodiment of the analysis supporting apparatus, analysis supporting method, and analysis supporting program according to the present invention is explained in detail below.

First, an operation environment of an analysis supporting apparatus 10 according to the present embodiment is explained. The analysis supporting apparatus 10 is an apparatus that collectively manages information about thermal analysis to support a designer's work. Specifically, the analysis supporting apparatus 10 stores model data for performing thermal analyses on various components forming a product under development in association with information representing a component hierarchy and, for example, automatically generates model data of a component to be newly analyzed.

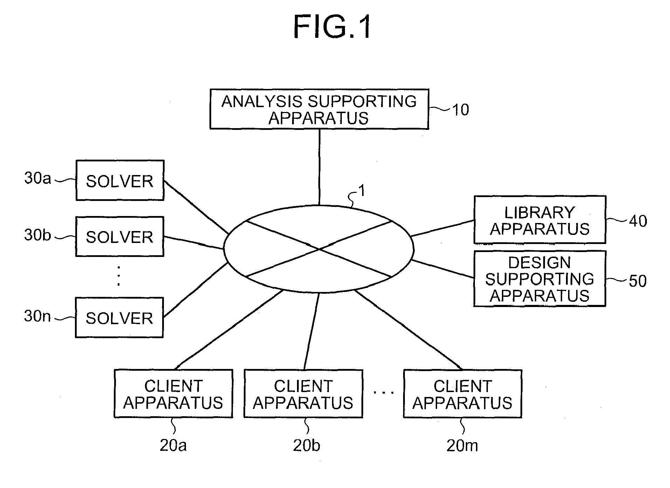

Fig. 1 is a drawing of one example of a network including the analysis supporting apparatus 10 according to the embodiment of the present invention. In the example depicted in Fig. 1, the analysis supporting apparatus 10 is connected via a network 1 to client apparatuses 20a to 20m, solvers 30a to 30n, a library apparatus 40, and a design supporting apparatus 50. The network 1 is a LAN (Local Area Network) or the Internet, for example.

The client apparatuses 20a to 20m are terminal apparatuses operated by designers for thermal analysis and, specifically, correspond to personal computers, work stations, or the like. The solvers 30a to 30n are apparatuses that each perform a thermal analysis. Details of the thermal analysis differ depending on the type of component. The solvers 30a to 30n correspond to different thermal analyses, input data of different formats, and output analysis results of different formats. For example, the solver 30a is an apparatus for a thermal analysis on a package, which is a component with a semiconductor chip, such as an LSI (Large-Scale Integrated circuit), covered with a plastic or ceramic case, the solver 30b is an apparatus for a thermal analysis on a semiconductor chip, and the solver 30n is an apparatus for a thermal analysis on a final product in which all components are combined.

The library apparatus 40 is an apparatus that stores various information about general component specifications for each component. The general components mentioned herein include commercially-available components as well as a component that is designed for a specific product but can also be used for other products. The design supporting apparatus 50 is an apparatus that supports component designing and, specifically, has a CAD (Computer Aided Design) function and a function of storing design data created with the CAD function.

The analysis supporting apparatus 10 accesses these apparatuses explained above as required via the network 1 to achieve various processes. Here, the analysis supporting apparatus 10 can be configured to have any or all of the functions of these apparatuses. In the following explanation, the client apparatuses 20a to 20m are collectively referred to as a client apparatus 20 unless any of them is specified, and the solvers 30a to 30n are collectively referred to as a solver 30 unless any of them is specified.

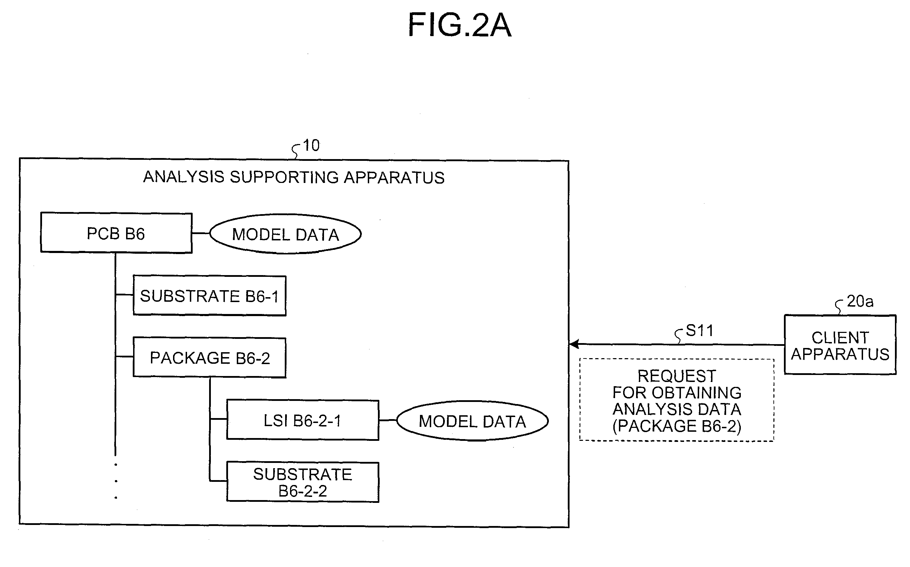

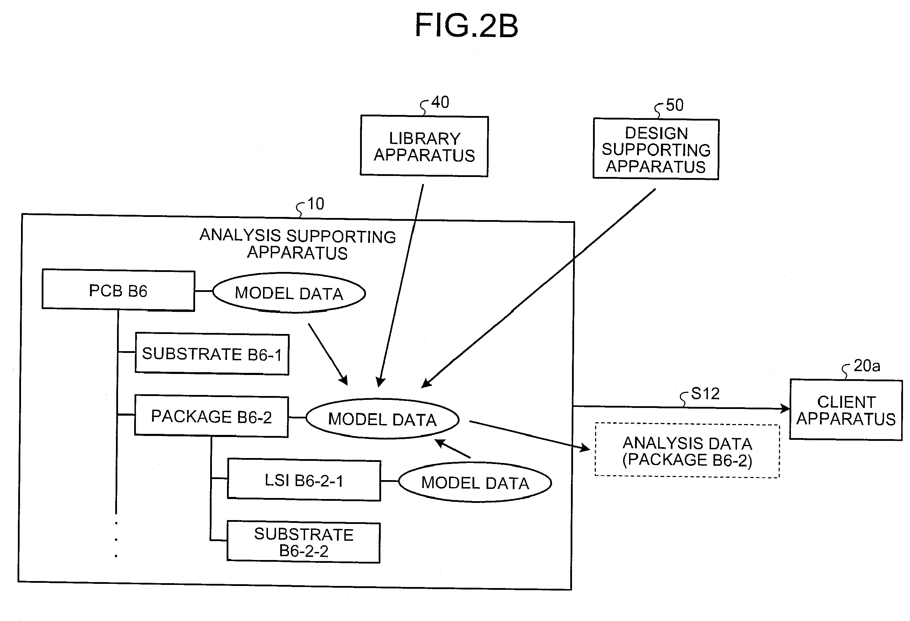

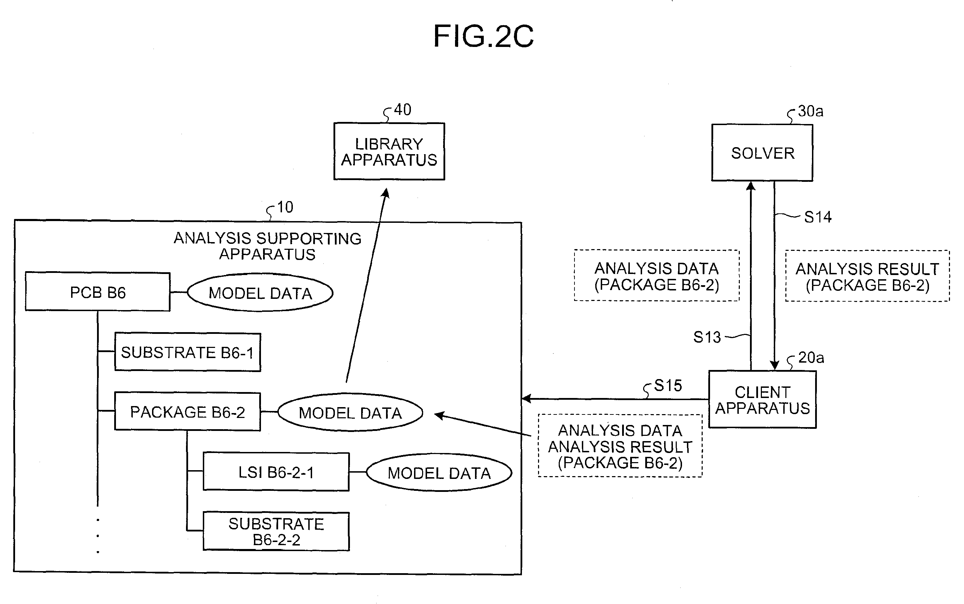

Next, an outline of model data management by the analysis supporting apparatus 10 is explained. Figs. 2A to 2C are drawings of the outline of model data management by the analysis supporting apparatus 10. As depicted in Fig. 2A, the analysis supporting apparatus 10 stores information about the hierarchy of components forming a product to be analyzed (an analysis target product) as data in a tree structure. In the example depicted in Fig. 2A, the analysis supporting apparatus 10 stores information such that there are a substrate with a component number of "B6-1" and a package with a component number of "B6-2" under a hierarchical level of a printed circuit board (hereinafter, "PCB (Printed Circuit Board)") with a component number of "B6", and there are an LSI with a component number of "B6-2-1" and a substrate with a component number of "B6-2-2" under a hierarchical level of the package with the component number of "B6-2".

Also, of the components at the respective hierarchical levels, the analysis supporting apparatus 10 stores model data in association with a component that is to be subjected to a thermal analysis. The model data contains analysis data representing input data for performing a thermal analysis and analysis-result data representing the results of the thermal analysis. The format of model data differs for each type of thermal analysis, but is designed to be independent from a specific solver and be able to work even if the solver is replaced by a solver provided by another vendor to perform a similar type of thermal analysis.

In the example depicted in Fig. 2A, a thermal analysis is performed on a PCB with a component number of "B6" and an LSI with a component number of "B6-2-1", and model data is stored in association with each of these components. It is assumed herein that a designer operating the client apparatus 20a newly starts a thermal analysis on the package with the component number of "B6-2". When the designer starts the operation of analyzing this package, the client apparatus 20a transmits to the analysis supporting apparatus 10 a request for obtaining analysis data of the component with the component number of "B6-2" (Step S11).

The analysis supporting apparatus 10 receives the analysis-data obtaining request from the client apparatus 20a. If the model data of the specified component has already been generated, the analysis supporting apparatus 10 converts the model data to a format of analysis data corresponding to the solver that performs a thermal analysis on that component, and responds with the converted analysis data to the requesting apparatus. On the other hand, as in this example, if the model data of the specified component has not yet been generated, model data is generated for the first time.

To generate model data for the first time, model data at another hierarchical level or information stored in another apparatus is used. For example, as model data of the PCB with the component number of "B6" in this example, when model data at a higher hierarchical level is present, the analysis supporting apparatus 10 uses, from the model data at a higher hierarchical level, an air volume or the like supplied to the package with the component number of "B6-2" as an analysis condition. Also, as the model data of the LSI with the component number of "B6-2-1" in this example, if model data at a lower hierarchical level is present, the analysis supporting apparatus 10 obtains the analysis results from the model data at the lower hierarchical level for use as heat source information.

Furthermore, the analysis supporting apparatus 10 obtains from the design supporting apparatus 50 design information, such as the shape, size, material, and other properties of the specified component or a component at a lower hierarchical level for use as physical conditions. Still further, if any component at a lower hierarchical level does not have model data although the component requires heat-source information and heat-resistance information for thermal analysis, the analysis supporting apparatus 10 obtains heat-source information and heat-resistance information from the library apparatus 40 for use. If any component is present whose information is not included even in the library apparatus 40, based on design information of that component, model data of a similar component is found in the model data of another product or model data of the same product in another development phase, and heat-source information and heat-resistance information are obtained from the found model data for use.

Then, the analysis supporting apparatus 10 generates, for the first time, model data in a format corresponding to the package of the type of the specified component based on the obtained various information, and stores the generated model data in association with the package with the component number of "B6-2". The analysis supporting apparatus 10 then converts the model data generated for the first time to generate analysis data serving as input data for a thermal process on the package, and then responds to the requesting client apparatus 20a (Step S12).

Next, the client apparatus 20a causes the received analysis data to be displayed on a user interface to prompt the designer to enter lacking (missing) information and other input, and then transmits the analysis data to the solver 30a to request a thermal analysis (Step S13). The requested solver 30a then performs a thermal analysis by using the transmitted analysis data, and responds to the client apparatus 20a with the analysis results (Step S14). The client apparatus 20a then requests that the analysis data transmitted to the solver 30a and the analysis results received from the solver 30a be transmitted to the analysis supporting apparatus 10 for storage (Step S15).

The analysis supporting apparatus 10 requested for storage reflects the analysis data and the analysis results in the model data. If the analysis data and the analysis results contain information to be registered in the library apparatus 40, the analysis supporting apparatus 10 extracts that information and registers it in the library apparatus.

In this manner, in model data management by the analysis supporting apparatus 10, when a thermal analysis is newly performed on a component, model data of a component at a higher or lower hierarchical level or the like is used to generate model data of the thermal-analysis target component for the first time. From that model data, analysis data is generated. With this, the number of processes for the designer to generate analysis data is significantly reduced. Also, consistency with model data of a component at another hierarchical level can be easily ensured.

Furthermore, in model data management by the analysis supporting apparatus 10, the analysis results are stored as the model data and component information in the library apparatus 40, and are used at the time of performing a thermal analysis on another component. With this, as a thermal analysis is repeated, operation efficiency of the designer and analysis accuracy are increased.

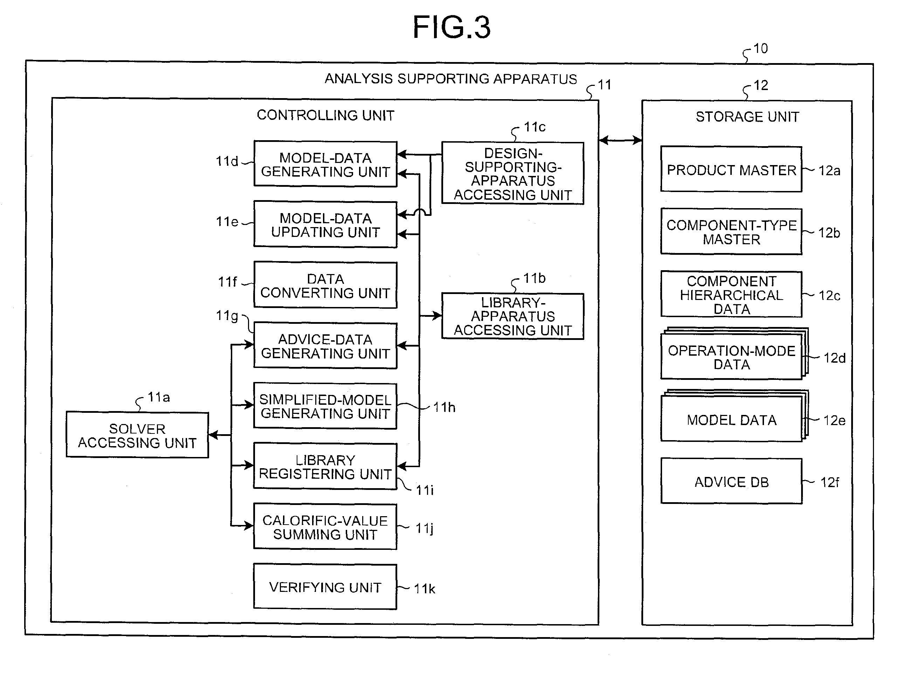

Next, the configuration of the analysis supporting apparatus 10 is explained. Fig. 3 is a functional block diagram of the configuration of the analysis supporting apparatus 10. As depicted in Fig. 3, the analysis supporting apparatus 10 includes a controlling unit 11 and a storage unit 12. The controlling unit 11 controls the entire analysis supporting apparatus 10, and includes a solver accessing unit 11a, a library-apparatus accessing unit 11b, a design-supporting-apparatus accessing unit 11c, a model-data generating unit 11d, a model-data updating unit 11e, a data converting unit 11f, an advice-data generating unit 11g, a simplified-model generating unit 11h, a library registering unit 11i, a calorific-value summing unit 11j, and a verifying unit 11k.

The solver accessing unit 11a controls exchanges of various information among the solvers 30a to 30n. The library-apparatus accessing unit 11b controls exchanges of various information with the library apparatus 40. The design-supporting-apparatus accessing unit 11c controls exchanges of various information with the design supporting apparatus 50.

The model-data generating unit 11d generates model data for the first time. The model-data updating unit 11e updates the model data. The data converting unit 11f performs various converting processes regarding the model data. Specifically, the data converting unit 11f converts the model data to generate data in a format unique to a solver, and converts data in a format unique to a solver to reflect the conversion results in the model data.

The advice-data generating unit 11g generates advice data for supporting a designer's thermal design operation. The simplified-model generating unit 11h generates another set of model data based on the model data, with a physical shape or the other being simplified. For example, in the case of a semiconductor chip, to accurately analyze the position and temperature of a hot spot, fine mesh division is required for thermal analysis. In a thermal analysis on a component at a higher hierarchical level including that semiconductor chip, however, the results of the thermal analysis on the semiconductor chip generated with fine mesh division have too much information, thereby making the process complicated more than required. To get around this, the simplified-model generating unit 11h automatically generates model data at a lower hierarchical level simplified for a thermal analysis on a component at a higher hierarchical level (such model data is hereinafter, "simplified model").

When information to be registered in the library apparatus 40 is contained in model data, the library registering unit 11i registers that information in the library apparatus 40. The calorific-value summing unit 11j calculates a calorific value in units of product to be analyzed. The verifying unit 11k performs various verifying processes, such as a process of verifying the state of progress of an analyzing operation.

The storage unit 12 is a storage apparatus that stores therein various information such as a product master 12a, a component-type master 12b, component hierarchical data 12c, operation-mode data 12d, model data 12e, and an advice DB (database) 12f.

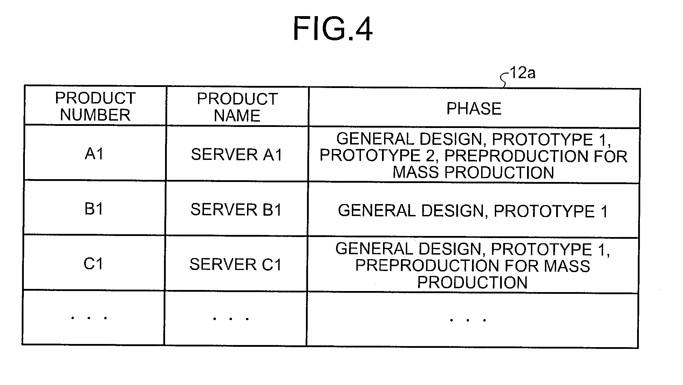

The product master 12a is master data in which information about the analysis target product is registered. An example of the product master 12a is depicted in Fig. 4. As depicted in Fig. 4, the product master 12a has items including product number, product name, and phase. The product number is an item in which an identification number for identifying the product is set. The product name is an item in which the name of the product is set. The phase is an item in which a list of product development phases in time series is set.

For example, the second line of the product master 12a depicted in Fig. 4 represents that a product with a product number of "B1" is present, its product name is "server B1", and development phases of "general design" and "prototype 1" have taken place so far for that product.

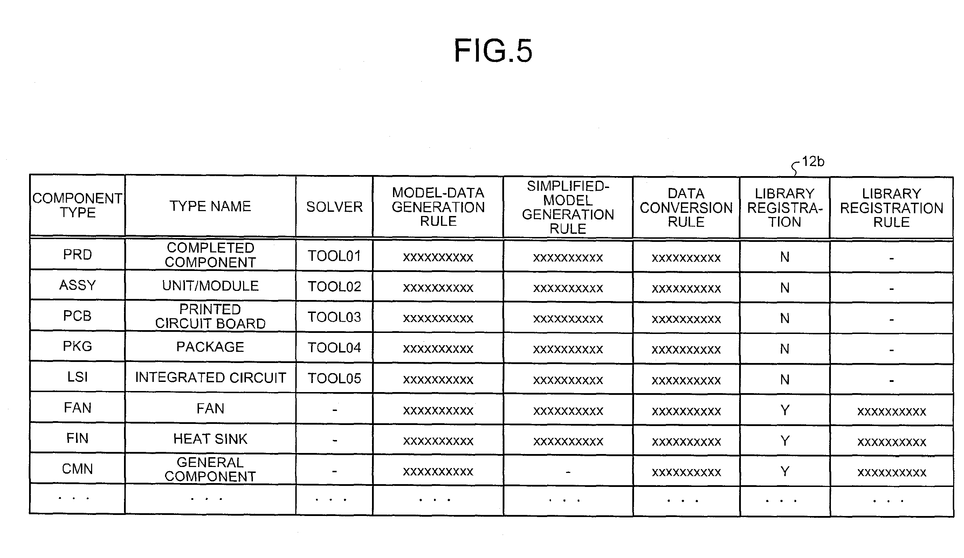

The component-type master 12b is master data in which various setting information is registered for each type of component. An example of the component-type master 12b is depicted in Fig. 5. As depicted in Fig. 5, the component-type master 12b includes items, such as component type, type name, solver, model-data generation rule, simplified-model generation rule, data conversion rule, library registration, library registration rule.

The component type is an item in which an identification number for identifying the type of component is set. The type name is an item in which the name of the type of component is set. The solver is an item in which an identification number for identifying a solver to perform a heat analysis on that type of component is set. In the case of a type not solely subjected to a thermal analysis, the solver item is blank.

The model-data generation rule is an item in which a rule is set having defined therein, for example, a format of the model data, a source of the obtained data and an initial value for each item at the time of initial generation. The simplified-model generation rule is an item in which a rule is set having defined therein, for example, a procedure for the simplified-model generating unit 11h to generate a simplified model. In the case of a type not to be simplified, the simplified-model generation rule item is blank. The data conversion rule is an item in which a rule is set having defined therein, for example, a correspondence with the analysis data, the format of the analysis results, the items of the model data, etc.

The library registration is an item in which a flag indicating whether the information of that type of component is required to be registered in the library apparatus 40 is set. If the information is required to be registered, a "Y" value is taken. Otherwise, an "N" value is taken. The library registration rule is an item in which a rule is set having defined therein, for example, a procedure of registering information in the library apparatus 40.

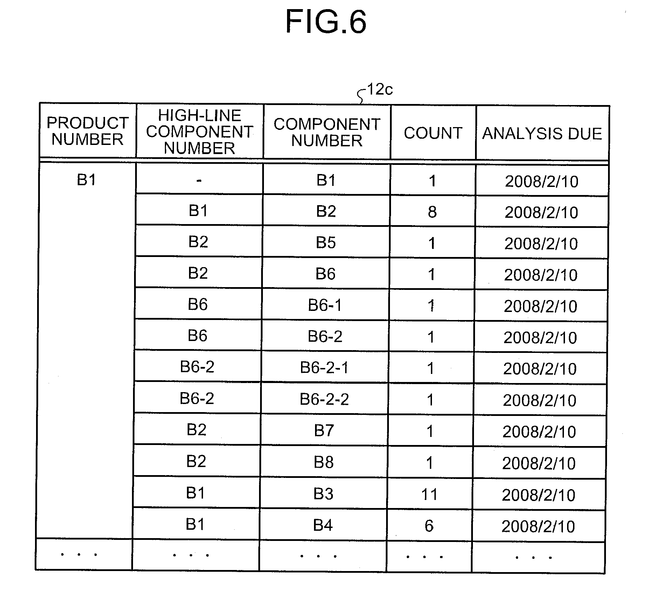

The component hierarchical data 12c represents the hierarchy of the component forming a product as a tree structure. An example of the component hierarchical data 12c is depicted in Fig. 6. As depicted in Fig. 6, the component hierarchical data 12c includes items, such as product number, high-line component number, component number, counts, and analysis due, and is configured to allow registration of a plurality of combinations from the high-line component to analysis due for each product number.

The product number is an item in which an identification number for identifying a product is set, and corresponds to the product number in the product master 12a. The high-line component number is an item in which the component number of a component at a hierarchical level higher than the hierarchical level of the analysis target component is set. The component number is an item in which a component number of the analysis target component is set. When the analysis target component is at the highest hierarchical level, the high-line component number is blank. The counts are an item in which the number of components at that hierarchical level is set. The analysis due is an item in which a due date on which the analysis on that component has to be completed is set.

The component hierarchical data 12c depicted in Fig. 6 represents that, at the highest hierarchical level in the component hierarchy of a product with a component number of "B1", the component with a component number "B1" corresponding to the product itself is present, and immediately below the component with the component number of "B1" are eight components with a component number of "B2", eleven components with a component number of "B3", and six components with a component number of "B4". Also, the component hierarchical data 12c represents that immediately below the components with the component number of "B2" are one component with a component number of "B5" and one component with a component number of "B6"; immediately below the component with the component number of "B6" are one component with a component number of "B6-1" and one component with a component number of "B6-2"; and further immediately below the component with the component number of "B6-2" are one component with a component number of "B6-2-1" and one component with a component number of "B6-2-2".

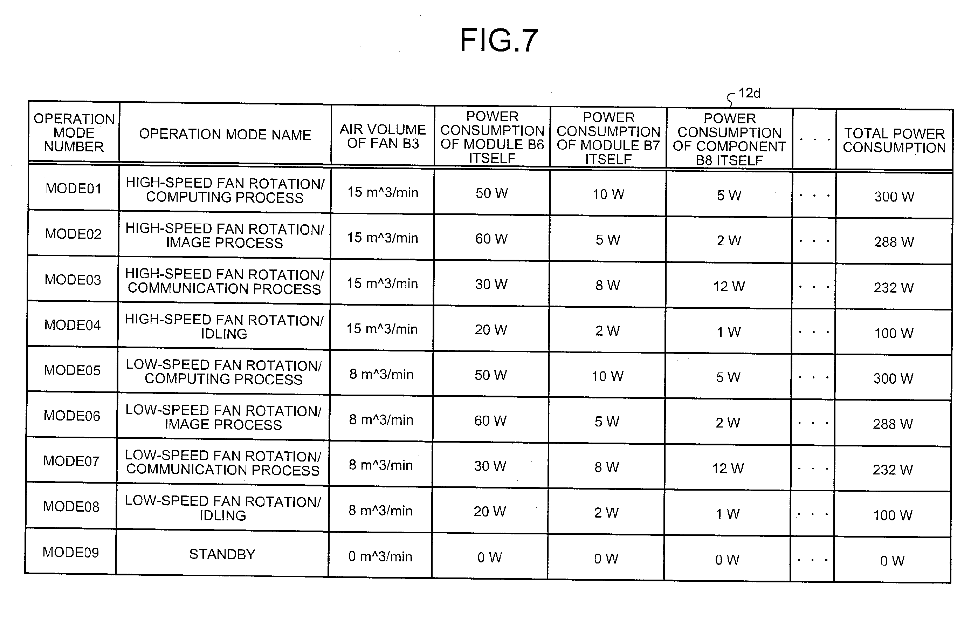

The operation-mode data 12d has registered therein analysis conditions for each operation mode, and is present for each combination of the product number and the phase. An example of the operation-mode data 12d is depicted in Fig. 7. The operation-mode data 12d depicted in Fig. 7 corresponds to the phase of "prototype 1" of the product with the product number of "B1". As depicted in Fig. 7, the operation-mode data 12d has registered therein analysis conditions of each component for each operation mode.

The operation-mode data 12d depicted in Fig. 7 contains data in nine lines, indicating that nine types of operation modes are present for the analysis target product. Also, the first line of the operation-mode data 12d in this example represents that an operation mode identified with an operation mode number of "MODE01" is present; the name of this operation mode is "high-speed fan rotation/computing process"; the air volume of a fan with a component number of "B3" is "15m^3 per minute" in this operation mode; power consumption of a module itself with a component number of "B6" is "50 watts"; power consumption of a module itself with a component number of "B7" is "10 watts"; power consumption of a component itself with a component number of "B8" is "5 watts"; and power consumption of entire apparatus is "300 watts".

The model data 12e retains information required for a component thermal analysis and the analysis results, and is present for each product, each phase, and each component. Furthermore, the model data 12e may have two types (sets) of data, a simplified version and a not-simplified version, even with the same product, phase, and component.

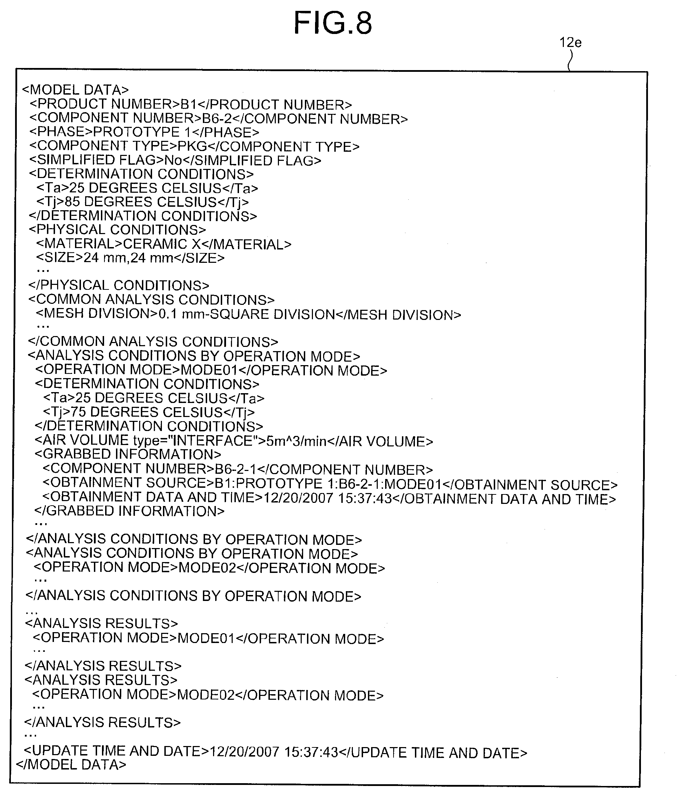

An example of the model data 12e is depicted in Fig. 8. As depicted in Fig. 8, the model data 12e includes items, such as product number, component number, phase, component type, simplified flag, determination conditions, physical conditions, common analysis conditions, analysis conditions by operation mode, analysis results, and update date and time. The product number is an item in which an identification number for identifying the product is set, and corresponds to a product number in the product master 12a. The component number is an item in which an identification number for identifying the component is set, and corresponds to the component number in the component hierarchical data 12c. The phase is an item in which a code representing a development phase of goods is set, and any one of values in the phase item in the product master 12a is set.

The component type is an item in which an identification number for identifying the type of component is set, and corresponds to a component type in the component-type master 12b. The simplified flag is an item in which a flag indicating whether the model data represents a simplified model generated by the simplified-model generating unit 11h is set. If the model data represents a simplified model, the flag takes a "Yes" value. Otherwise, the flag takes a "No" value. The product number to the simplified flag in the model data 12e depicted in Fig. 8 represent that this model data corresponds to a component with a component number of "B6-2" of a product with a product number of "B1" in a phase of "prototype 1"; this component is classified as a component type of "PKG"; and the model data does not represent a simplified model.

The determination conditions are an item in which conditions for determining whether the analysis results are good or bad are set. The determination conditions depicted in Fig. 8 show that the analysis results are determined as good under conditions of a windward air temperature (Ta: Ambient Temperature) at 25 degrees Celsius and a surface temperature of the semiconductor chip (Tj: Junction Temperature) not exceeding 85 degrees Celsius.

The physical conditions is an item in which information is specified about physical specifications of that component and components included in that component (components at a hierarchical level lower than that of that component in the component hierarchy), such as material, size, and arrangement. In this item, values are set typically based on information obtained from the library apparatus 40 and the design supporting apparatus 50. The physical conditions depicted in Fig. 8 indicate that the component corresponding to this model data is made of "ceramic X", and has a size of 24-millimeter square.

The common analysis conditions are an item in which those of the analysis conditions not depending on the operation mode are set. The common analysis conditions depicted in Fig. 8 represent that the component is subjected to mesh division of 0.1-millimeter square in a thermal analysis corresponding to this model data.

The analysis conditions by operation mode is an item in which only those of the analysis conditions depending on the operation mode are set, and they are as many as the number of operation modes registered in the corresponding operation-mode data 12d. That is, since nine types of operation modes are registered in the operation-mode data 12d depicted in Fig. 7, nine items of analysis conditions by operation mode are present in the model data of this example, each retaining analysis information of the corresponding operation mode.

For example, the first analysis conditions by operation mode in the model data 12e depicted in Fig. 8 represent that the analysis conditions by operation mode correspond to the operation mode with the operation-mode number of "MODE01"; a determination condition is such that the surface temperature of the semiconductor chip (Tj) does not exceed 75 degrees Celsius when the ambient (outside) air temperature (Ta) is at 25 degrees Celsius; the windward air (ventilation air) volume of the component corresponding to this mode data is 5m^3 per minute; and the analysis results of the operation mode of "MODE01" are obtained from the model data of the product number of "B1", the phase of "prototype 1", and the component number "B6-2-1" on "12/20/2007 15:37:43" for use as heat-source information of the component at the lower hierarchical level with the component number of "B6-2-1".

As in this example, the determination conditions can be set for each operation mode. The determination conditions set for each operation mode are used with a higher priority than determination conditions set outside of the analysis conditions by operation mode. Also, the analysis conditions set in the common analysis conditions and the analysis conditions by operation mode may include an attribute of "type="interface"". The analysis conditions including this attribute are required to have values that coincide with values of the model data at a higher hierarchical level. In the example of Fig. 8, the air-volume analysis condition includes this attribute, indicating that the windward air volume is required to coincide with the windward air volume of the component at the higher hierarchical level.

The analysis results are an item in which thermal analysis results are set, and they are as many as the number of operation modes registered in the corresponding operation-mode data 12d. That is, since nine types of operation modes are registered in the operation-mode data 12d depicted in Fig. 7, nine items of analysis results are present in the model data of this example, each retaining analysis results of the corresponding operation mode.

In this manner, the analysis supporting apparatus 10 is configured to be able to retain the analysis conditions and the analysis results for each operation mode, thereby performing a thermal analysis at each hierarchical level for each operation mode and finding accurate analysis results for each operation mode.

The advice DB 12f is a database in which various information required for the advice-data generating unit 11g to generate advice data is stored.

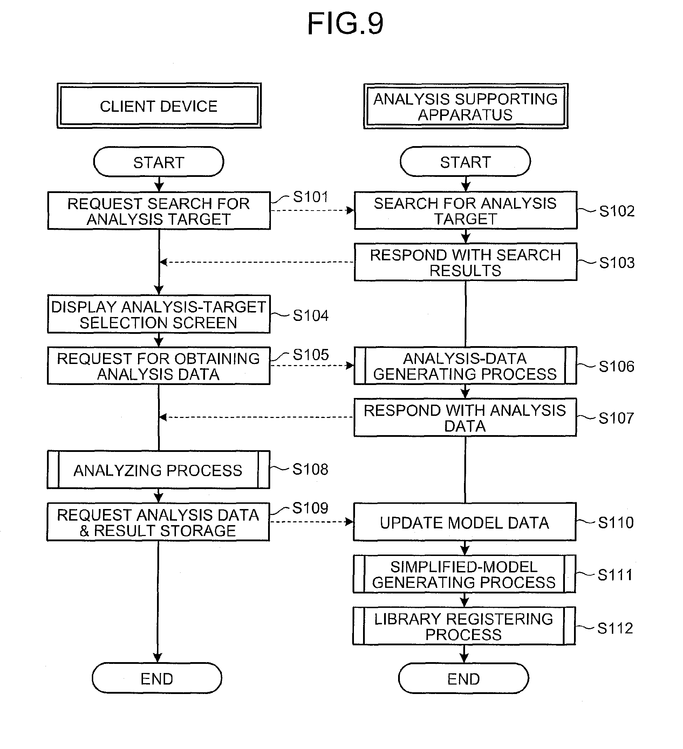

Next, the operation of the analysis supporting apparatus 10 is explained. Fig. 9 is a flowchart of an outline of procedure of performing an analysis when the analysis supporting apparatus 10 is used. As depicted in Fig. 9, the client apparatus 20 transmits a request for searching for an analysis target component to the analysis supporting apparatus 10 in accordance with the designer's instruction (Step S101). Then, the controlling unit 11 of the analysis supporting apparatus 10 then searches for information about the component matching the specified conditions (Step S102), and responds to the client apparatus 20 with the search results (Step S103).

Upon receiving the search results, the client apparatus 20 causes an analysis-target selection screen to be displayed for displaying the search results in a list form, thereby causing the designer to select an analysis target component (Step S104). The client apparatus 20 then transmits a request for obtaining analysis data of the selected component to the analysis supporting apparatus 10 (Step S105).

Upon receiving the request for obtaining analysis data, the analysis supporting apparatus 10 performs an analysis-data generating process, which will be explained further below, to generate analysis data of the requested component (Step S106), and responds to the client apparatus 20 with the generated analysis data (Step S107). At this time, the analysis supporting apparatus 10 also transmits determination conditions included in the model data corresponding to the requested component to the client apparatus 20.

Upon receiving the analysis data, the client apparatus 20 performs an analyzing process, which will be explained further below, to edit the analysis data and request the solver to perform a thermal analysis (Step S108). Upon obtaining the analysis results, the client apparatus 20 transmits the analysis data and the analysis results to the analysis supporting apparatus 10 and requests storage (Step S109).

Upon receiving the storage request, the analysis supporting apparatus 10 reflects the transmitted analysis data and analysis results in the corresponding model data (Step S110), performs a simplified-model generating process, which will be explained further below (Step S111), and further performs a library registering process (Step S112).

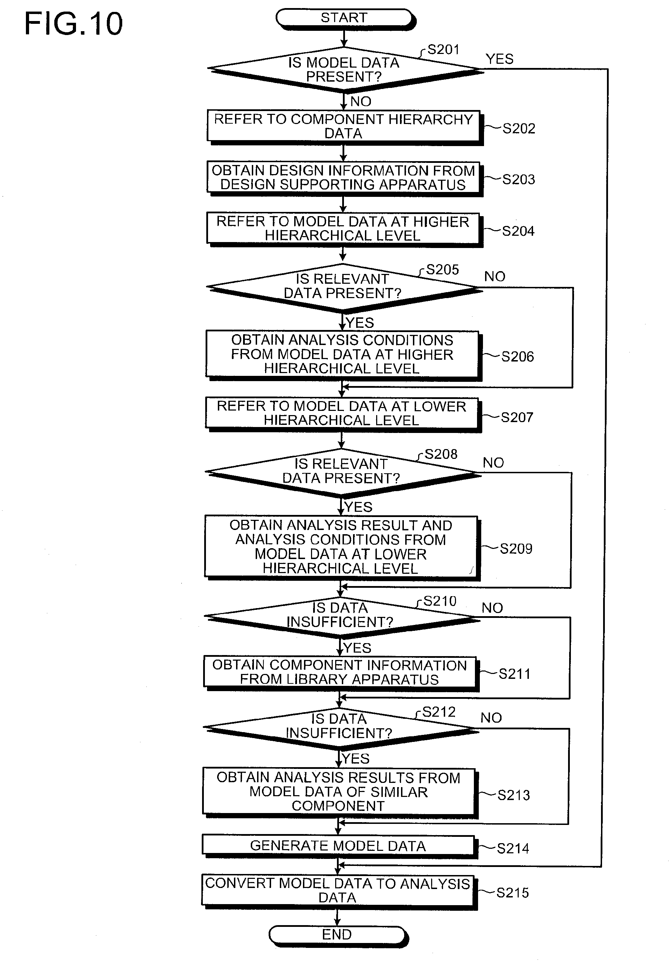

Fig. 10 is a flowchart of a procedure of the analysis data generating process. As depicted in Fig. 10, when the analysis supporting apparatus 10 receives the analysis-data obtainment request, the model-data generating unit 11d searches for model data corresponding to the specified component. Here, targets for searching are model data other than simplified model data. If the relevant model data is present ("Yes" at Step S201), the data converting unit 11f obtains the data conversion rule corresponding to the component type of that model data from the component-type master 12b to convert the model data to analysis data according to the data conversion rule (Step S215).

On the other hand, if the relevant model data is not present ("No" at Step S201), the model-data generating unit 11d refers to the component hierarchical data 12c to obtain the component number of a component at a hierarchical level higher than that of the specified component and the component number of a component at a hierarchical level lower than that of the specified component (Step S202). The model-data generating unit 11d then obtains design information about the component and the component at the lower hierarchical level from the design supporting apparatus 50 via the design-supporting-apparatus accessing unit 11c (Step S203).

Next, the model-data generating unit 11d refers to the model data of the same product and the same phase corresponding to the component at the higher hierarchical level (Step S204). If the relevant model data is present ("Yes" at Step S205), the analysis conditions are obtained from the model data at the higher hierarchical level (Step S206).

Next, the model-data generating unit 11d refers to the model data of the same product and the same phase corresponding to the component at the lower hierarchical level (Step S207). If the relevant model data is present ("Yes" at Step S208), the analysis results and the analysis conditions are obtained from the model data at the lower hierarchical level (Step S209). Here, the simplified model is obtained with priority. If any component at a lower hierarchical level whose information cannot be obtained is present ("Yes" at Step S210), the model-data generating unit 11d tries to obtain component information of such component from the library apparatus 40 via the library-apparatus accessing unit 11b (Step S211).

If any component at a lower hierarchical level whose information cannot still be obtained is present ("Yes" at Step S212), the model-data generating unit 11d searches model data of another product or phase for model data of a component whose design information and analysis conditions are similar to the component, and obtains the search results from the found model data (Step S213).

After collecting information in this manner, the model-data generating unit 11d obtains the model-data generation rule corresponding to the component type of the component from the component-type master 12b to generate model data for the first time according to that model-data generation rule by setting the collected various information (Step S214). Then, the data converting unit 11f obtains the data-conversion rule corresponding to the component type of that model data from the component-type master 12b to convert the model data to analysis data according to the data-conversion rule (Step S215).

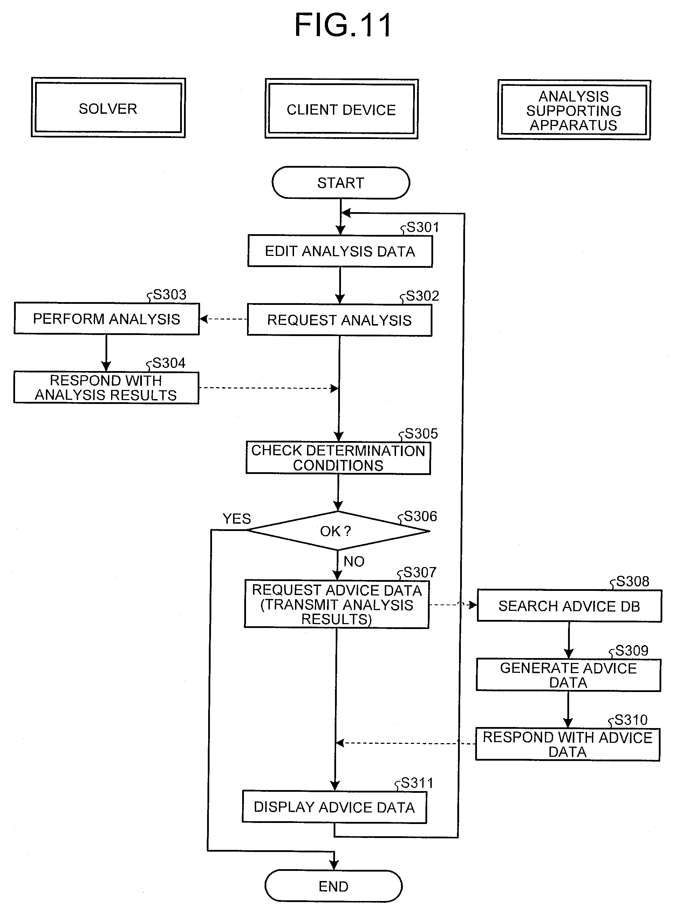

Fig. 11 is a flowchart of a procedure of the analyzing process. As depicted in Fig. 10, the client apparatus 20 causes the designer to edit the analysis data, grab lacking information, and others (Step S301). After editing is completed, the client apparatus 20 transmits the analysis data to the solver 30 to request a thermal analysis (Step S302). Upon receiving the analysis request, the solver 30 performs a thermal analysis for each operation mode (Step S303), and responds to the client apparatus 20 with the analysis results (Step S304).

The client apparatus 20 then checks to see whether the analysis results of all operation modes satisfy the determination conditions (Step S305). If they satisfy the determination conditions ("Yes" at Step S306), the analyzing process ends. On the other hand, if they do not satisfy the determination conditions ("No" at Step S306), the client apparatus 20 transmits the analysis results to the analysis supporting apparatus 10 to request advice data (Step S307).

When the analysis supporting apparatus 10 receives a request for advice data, the advice-data generating unit 11g searches the advice DB 12f to obtain a generation logic of advice data corresponding to the transmitted analysis results (Step S308). Then, the advice-data generating unit 11g generates advice data based on the obtained generation logic (Step S309), and responds to the client apparatus 20 with the generated advice data (Step S310).

The client apparatus 20 then causes the received advice data to be displayed on an advice display screen to cause the designer to check the details of the advice (Step S311), and the procedure then returns to step S301 to restart editing the analysis data.

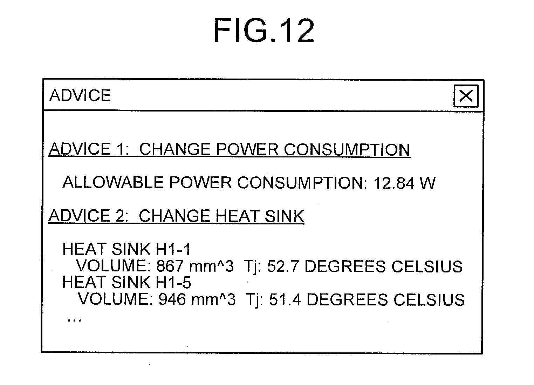

Fig. 12 is a drawing of an example of the advice display screen. The advice display screen depicted in Fig. 12 indicates that the analysis results are for a package, and the two types of logics are registered in the advice DB as advice-data generation logics for a component with its component type being package, which are explained below.

A first logic is such that a thermal resistance of the target component is calculated from a difference between the windward air temperature (Ta) and the surface temperature (Tj) of the semiconductor chip of the target component in the analysis results and the power consumption of the target component and, based on the calculated thermal resistance, an allowable power consumption indicating the maximum power consumption that can satisfy the determination conditions is calculated. The advice data generated based on the first logic is displayed on an upper part of the advice display screen depicted in Fig. 12.

A second logic is such that, as an alternative of the heat sink that is supposed to be used, heat sinks matching the following conditions are searched for from the library apparatus 40 and a predetermined number of heat sinks are extracted in order of increasing volume, that is, with the one with a lower possibility of space restriction coming first:

Tj=(Rh+Rp)×P≤determination-upper-limit temperature, where Rh is a thermal resistance of the heat sink, Rp is a package inside thermal resistance obtained as the analysis result, and P is a power consumption of the target component. The advice data generated based on this logic is displayed from the center portion and therebelow of the advice display screen depicted in Fig. 12.

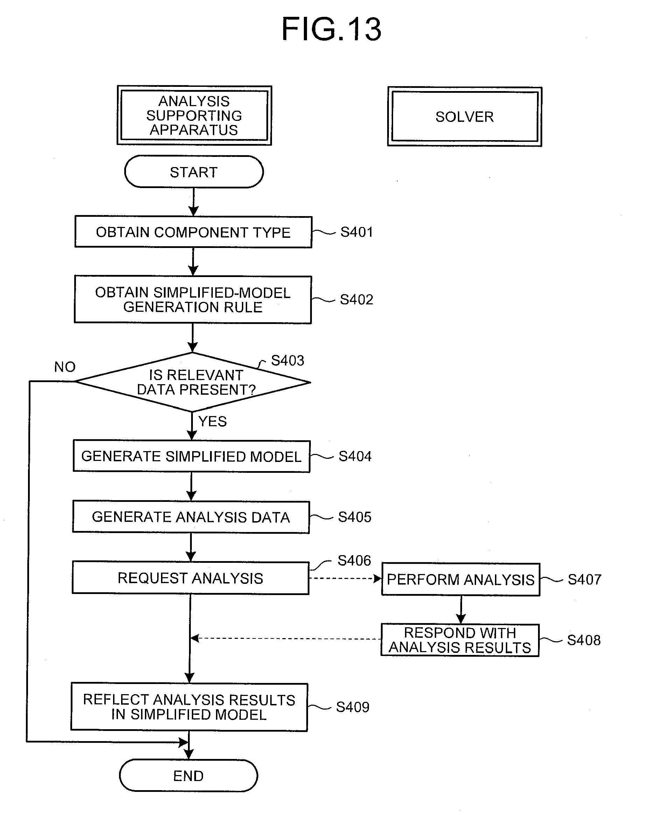

Fig. 13 is a flowchart of a procedure of the simplified-model generating process. As depicted in Fig. 13, the simplified-model generating unit 11h first obtains the component type from the model data corresponding to the analysis data and the analysis results that are requested to be stored (Step S401), and obtains the simplified-model generation rule corresponding to the component type from the component-type master 12b (Step S402). Here, if no corresponding simplified-model generation rule is present ("No" at Step S403), the simplified-model generating unit 11h ends the simplified-model generating process without generating any simplified model.

On the other hand, if the corresponding simplified-model generation rule has been found ("Yes" at Step S403), the simplified-model generating unit 11h generates a simplified model from not-simplified normal model data or others according to the simplified-model generation rule (Step S404). The simplified-model generating unit 11h then generates analysis data from the generated simplified model (Step S405), and transmits the analysis data to the solver 30 to request a thermal analysis (Step S406).

Upon receiving the analysis request, the solver 30 performs a thermal analysis (Step S407), and responds to the simplified-model generating unit 11h with the analysis results (Step S408). Upon receiving the analysis results, the simplified-model generating unit 11h requests the model-data updating unit 11e to reflect the analysis results in the simplified model (Step S409).

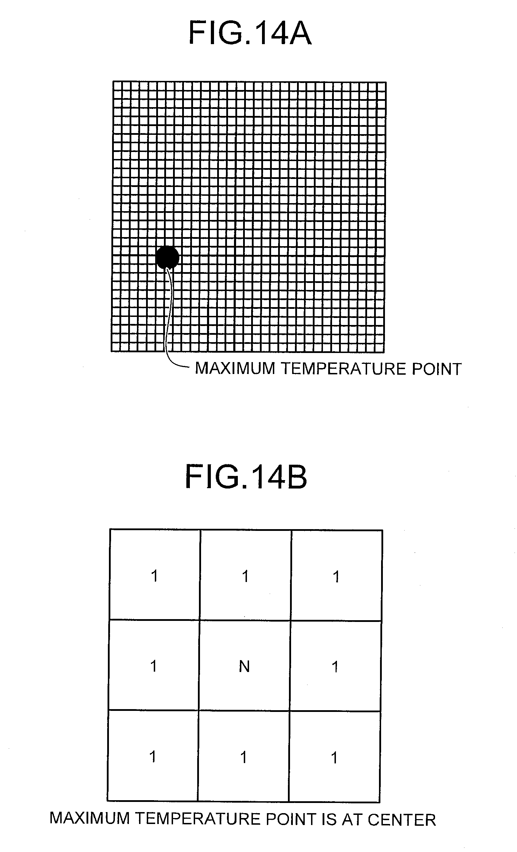

Here, a specific example of the simplified-model generation rule is explained. In the case of an LSI, for normal model data, as depicted in Fig. 14A, the chip surface is subjected to mesh division in a fine grid pattern. A power consumption is set for each grid point, and a grid becoming at a maximum temperature is analyzed, for example. On the other hand, in the simplified-model generation rule of the LSI, as depicted in Fig. 14B, for example, a simplified model is generated such that the chip surface is divided into nine areas, the total power consumption is equal to that of the normal model data, the temperature of the center area is equal to the maximum temperature in the normal model data, and the temperatures of the other areas are equal to each other. With such a simplified model being generated, the thermal analysis of the higher hierarchical level can be efficiently performed without degrading accuracy.

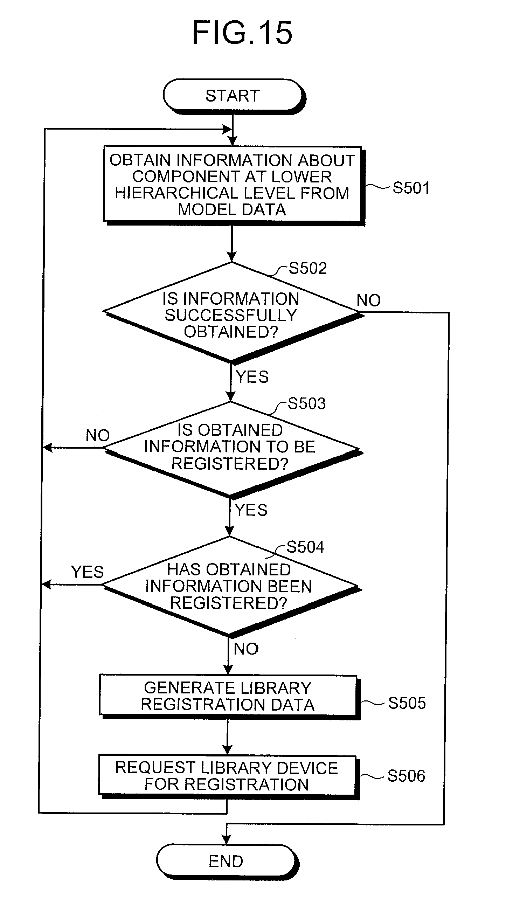

Fig. 15 is a flowchart of a procedure of the library registering process. As depicted in Fig. 15, the library registering unit 11i obtains not-yet-obtained information about a component at a lower hierarchical level from the model data corresponding to the analysis data and the analysis result requested to be stored (Step S501). If such information is successfully obtained ("Yes" at Step S502), the value in the library registration item corresponding to the component type of the component at the lower hierarchical level and the library registration rule are obtained from the component-type master 12b.

Here, if the value in the library registration item indicates "N", that is, if the information obtained at step S501 is for a component not required to be registered in the library apparatus 40 ("No" at Step S503), the library registering unit 11i returns to step S501, trying to obtain another not-yet-obtained information about a component at a lower hierarchical level from the model data corresponding to the analysis data and the analysis result requested to be stored.

On the other hand, if the value in the library registration item indicates "Y", that is, if the information obtained at step S501 is for the component required to be registered in the library apparatus 40 ("Yes" at Step S503), the library registering unit 11i accesses the library apparatus 40 to checks to see whether the component at the lower hierarchical level has already been registered. If the component has been registered ("Yes" at Step S504), the library registering unit 11i returns to step S501, trying to obtain another not-yet-obtained information about a component at a lower hierarchical level from the model data corresponding to the analysis data and the analysis result requested to be stored.

On the other hand, if the component at the lower hierarchical level has not yet been registered ("No" at Step S504), the library registering unit 11i generates registration data for registration in the library apparatus 40 according to the library registration rule (Step S505), and requests the library apparatus 40 to register that registration data (Step S506). The library registering unit 11i then returns to step S501, trying to obtain another not-yet-obtained information about a component at a lower hierarchical level from the model data corresponding to the analysis data and the analysis result requested to be stored.

In this manner, not-yet-obtained information about a component at a lower hierarchical level is tried to be obtained from the model data. If all components at any lower hierarchical level are subjected to this process for obtaining information and obtainable not-yet-obtained information is not present any more ("No" at Step S502), the library registering unit 11i ends the library registering process. Here, in the registration-data generating process at step S505, various processes including an analyzing process are performed according to the library registration rule. For example, when the component at any lower hierarchical level is a heat sink, a heat-resistance analysis is performed according to the library registration rule with a plurality of air volumes being changed into a plurality of patterns, and the analysis results are set in the registration data in association with the air volumes.

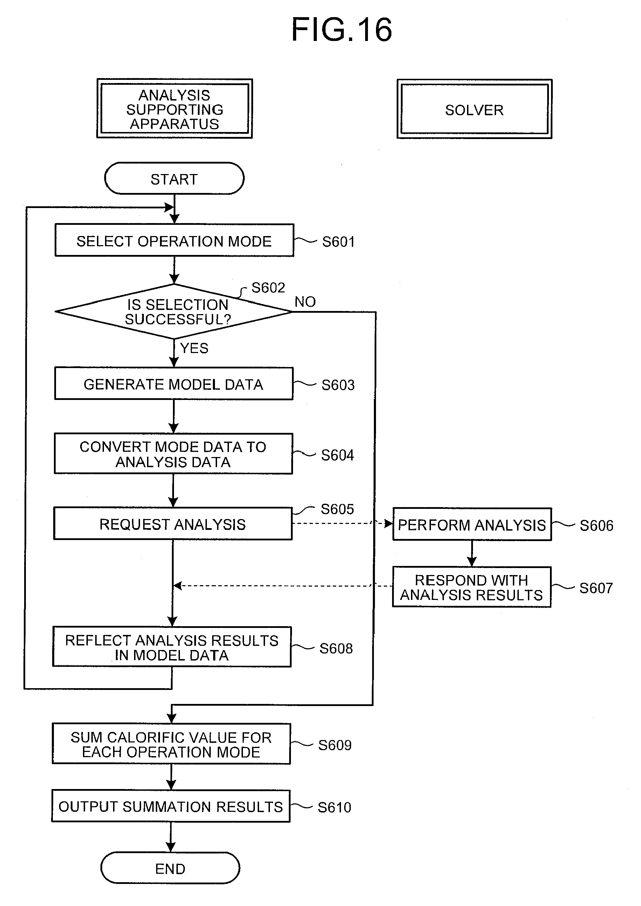

Fig. 16 is a flowchart of a procedure of the calorific-value summing process. The calorific-value summing process is a process of calculating a calorific value in units of product performed by the calorific-value summing unit 11j. As depicted in Fig. 16, the calorific-value summing unit 11j selects one of unselected operation modes from the operation-mode data 12d corresponding to the product number and phase of the analysis target product (Step S601).

If any operation mode is successfully selected ("Yes" at Step S602), the calorific-value summing unit 11j generates model data in units of product from information about the same operation mode in the model data at a lower hierarchical level (Step S603), converts the model data to analysis data (Step S604), and then transmits the analysis data to the solver 30 to request a thermal analysis (Step S605). Here, if the model data at a lower hierarchical level is insufficient or if any model data at a lower hierarchical level for which the analyzing process has not yet been completed is present, model data of a similar component is obtained in the model data of another product or model data of the same product in another development phase, as in the analyzing process depicted in Fig. 10, and the obtained model data is used as an alternative.

Upon receiving the analysis request, the solver 30 performs a thermal analysis (Step S606), and responds to the calorific-value summing unit 11j with the analysis results. Upon receiving the analysis results, the calorific-value summing unit 11j requests the model-data updating unit to reflect the analysis results in the model data (Step S608), and then returns to step S601, trying to select the next unselected operation mode.

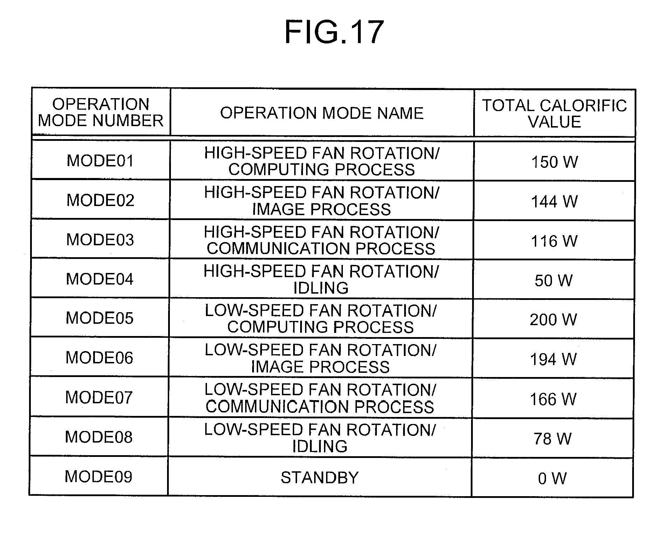

If all operation modes are selected and selectable unselected operation mode is not present any more ("No" at Step S602), the calorific-value summing unit 11j sums the calorific values for each operation mode (Step S609), and outputs the summation results (Step S610). Fig. 17 is a drawing of an example of the calorific-value summation results. As depicted in Fig. 17, the calorific-value summation results include a calorific value in units of product for each operation mode.

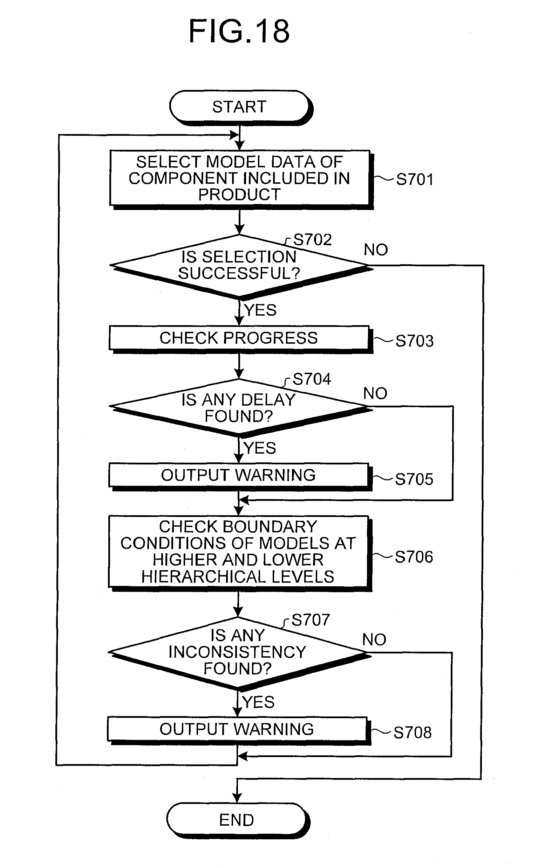

Fig. 18 is a flowchart of a procedure of the verifying process. The verifying process is a process performed by the verifying unit 11k for verifying the state of progress of the analyzing operation. As depicted in Fig. 18, the verifying unit 11k selects unselected model data of a component with the same product number and phase as that of the analysis target product (Step S701). If such model data is successfully obtained ("Yes" at Step S702), the verifying unit 11k checks the progress (Step S703). Specifically, the verifying unit 11k obtains the analysis due of the component corresponding to the model data from the component hierarchical data 12c and, if the current time is after the analysis due and at least one of the analysis results in the model data is not set or does not satisfy any determination condition ("Yes" at Step S704), it is determined that a delay has occurred, and a warning is output together with information about that model data (Step S705).

Next, the verifying unit 11k checks to see whether consistency of boundary conditions in the model data at higher and lower hierarchical levels is kept (Step S706). Specifically, it is checked to see whether analysis conditions including an attribute of "type="interface"" in the model data coincide with the analysis conditions of the component in the model data corresponding to the component at a higher hierarchical level. If any inconsistency is found ("Yes" at Step S707), it is determined that inconsistency in boundary conditions has occurred, and a warning is output together with information about that model data (Step S708).

The verifying unit 11k then returns to step S701, trying to select the next unselected model data. In this manner, if all model data are selected and selectable unselected model data is not present anymore ("No" at Step S702), the verifying unit 11k ends the process.

Here, the configuration of the analysis supporting apparatus 10 according to the present embodiment depicted in Fig. 3 can be variously changed within the present invention. For example, the function of the controlling unit 11 of the analysis supporting apparatus 10 can be implemented as software and executed by a computer to achieve functions similar to those of the analysis supporting apparatus 10. In the following, an example of a computer that executes an analysis supporting program 1071 with the function of the controlling unit 11 implemented as software is explained.

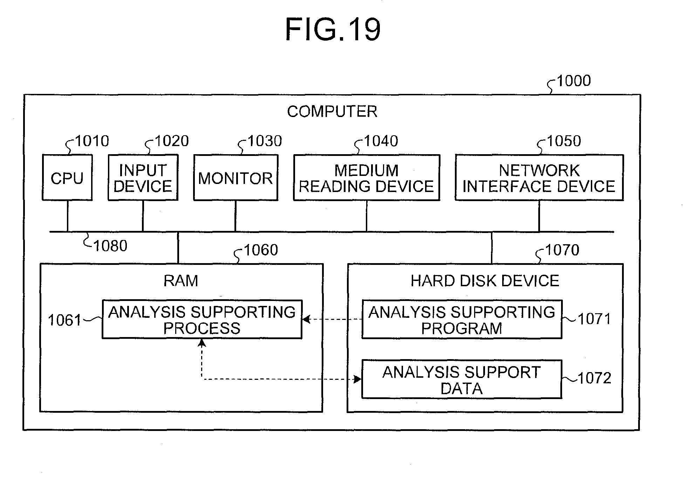

Fig. 19 is a functional block diagram of a computer 1000 that executes the analysis supporting program 1071. This computer 1000 includes a CPU (Central Processing Unit) 1010 that executes various computing processes, an input device 1020 that accepts an input of data from a user, a monitor 1030 that displays various information, a medium reading device 1040 that reads a program or the like from a recording medium, a network interface device 1050 that transmits and receives data with another computer via a network, a RAM (Random Access Memory) 1060 that temporarily stores various information, and a hard disk device 107, all of these components being connected via a bus 1080.

The hard disk device 1070 has stored therein the analysis supporting program 1071 with a function similar to that of the controlling unit 11 depicted in Fig. 3 and analysis support data 1072 corresponding to various data stored in the storage unit 12 depicted in Fig. 3. Here, the analysis support data 1072 can be distributed as appropriate to be stored in another computer connected via the network.

Then, the CPU 1010 reads the analysis supporting program 1071 from the hard disk device 1070 and loads it into the RAM 1060, thereby causing the analysis supporting program 1071 to serve as an analysis supporting process 1061. Then, the analysis supporting process 1061 loads information read from the analysis support data 1072 and other sources into its allocated memory area on the RAM 1060 as appropriate and, based on this and other data, executes various data processes.

Here, the analysis supporting program 1071 is not necessarily required to be stored in the hard disk device 1070. Alternatively, this program may be stored in a storage medium, such as a CD-ROM (Compact-Disk Read-Only Memory), and may be read by the computer 1000 for execution. Also, this program may be stored in another computer (or server) connected to the computer 1000 via public lines, the Internet, a LAN (Local-Area Network), a WAN (Wide-Area Network), or the like, and may be read by the computer 1000 therefrom for execution.

The example is explained in the embodiment above such that the present invention is used to support thermal analysis. However, the use purpose of the present invention is not restricted to the above, and the present invention can also be used to support various analyzing operations, such as structural analysis and electromagnetic-wave analysis.

Here, to solve the problems mentioned above, it is also effective to apply any component, representation, or an arbitrary combination of components of the analysis supporting apparatus explained above to a method, apparatus, system, computer program, storage medium, data structure, etc.

According to an embodiment of the analysis supporting apparatus, analysis supporting method, and analysis supporting program disclosed by the present invention, based on a logic registered in advance, advice data is generated from the analysis-related data collectively managed to improve design. With this, an effect is achieved such that, with the designer only storing the analysis-related data in a normal way, information for improving design can be provided without requiring a special skill.

Although the invention has been described with respect to specific embodiments for a complete and clear disclosure, the appended claims are not to be thus limited but are to be construed as embodying all modifications and alternative constructions that may occur to one skilled in the art that fairly fall within the basic teaching herein set forth.

## Claims

1. An analysis supporting apparatus for supporting a product analyzing operation, comprising:
a model-data generating unit arranged to generate model data regarding an analysis model of an analysis target component in association with component hierarchy data representing a hierarchy of components forming an analysis target product; and
a advice-data generating unit arranged to generate, based on a logic registered in advance, advice data from the model data to improve design with respect to the analysis target product.

2. The analysis supporting apparatus according to claim 1, wherein
the advice-data generating unit is arranged to calculate a thermal resistance of a component corresponding to the model data from the model data, and to calculate a maximum power consumption that satisfies a temperature condition of the component based on the thermal resistance for output as advice data.

3. The analysis supporting apparatus according to claim 1 or 2, wherein
the advice-data generating unit is arranged to output as the advice data a list containing a heat-dissipating component registered in advance that satisfies a temperature condition of a component corresponding to the model data when the heat-dissipating component is used in combination with the component.

4. The analysis supporting apparatus according to claim 3, wherein
the advice-data generating unit is arranged to sort the heat-dissipating components in order of volume for output as the advice data.

5. An analysis supporting method that supports a product analyzing operation, comprising:
generating model data regarding an analysis model of an analysis target component in association with component hierarchy data representing a hierarchy of components forming an analysis target product; and
generating, based on a logic registered in advance, advice data from the model data to improve design with respect to the analysis target product.

6. The analysis supporting method according to claim 5, further comprising:
calculating a thermal resistance of a component corresponding to the model data from the model data; and
calculating a maximum power consumption that satisfies a temperature condition of the component based on the thermal resistance for output as advice data.

7. The analysis supporting method according to claim 5 or 6, further comprising outputting as the advice data a list containing a heat-dissipating component registered in advance that satisfies a temperature condition of a component corresponding to the model data when the heat-dissipating component is used in combination with the component.

8. The analysis supporting method according to claim 7, further comprising sorting the heat-dissipating components in order of volume for output as the advice data.

9. A computer program that supports a product analyzing operation, the computer program causing a computer to execute:
generating model data regarding an analysis model of an analysis target component in association with component hierarchy data representing a hierarchy of components forming an analysis target product; and
generating, based on a logic registered in advance, advice data from the model data to improve design with respect to the analysis target product.

10. The computer program according to claim 9, wherein the computer program further causes the computer to execute:
calculating a thermal resistance of a component corresponding to the model data from the model data; and
calculating a maximum power consumption that satisfies a temperature condition of the component based on the thermal resistance for output as advice data.

11. The computer program according to claim 9 or 10, wherein the computer program further causes the computer to execute outputting as the advice data a list containing a heat-dissipating component registered in advance that satisfies a temperature condition of a component corresponding to the model data when the heat-dissipating component is used in combination with the component.

12. The computer program according to claim 11, wherein the computer program further causes the computer to execute sorting the heat-dissipating components in order of volume for output as the advice data.

13. A computer-readable medium storing the computer program according to any of claims 9 to 12.
